# EUROPÄISCHE PATENTANMELDUNG

(11) **EP 1 046 458 A2**
(43) Veröffentlichungstag der Anmeldung: **25.10.2000**
(21) Anmeldenummer: 00106526.7
(22) Anmeldetag: 27.03.2000
(51) Int. Cl.: B23Q 7/14

(54) **Werkstückhandhabungssystem sowie Verfahren zum Handhaben von Werkstücken**

(30) Priorität: 01.04.1999 DE 19915023
(71) Anmelder: Fibro GmbH, D-74189 Weinsberg (DE)
(72) Erfinder: Massmann, Hans-Joachim, 74831 Gundelsheim (DE); Beutel, Jörg-Hubertus, 74360 Ilsfeld (DE); Kratzer, Willi, 74842 Billigheim (DE); Weiser, Kurt, 74831 Gundelsheim (DE)
(74) Vertreter: Manitz, Finsterwald & Partner

(57) **Zusammenfassung**

Die Erfindung betrifft eine Werkstückhandhabungssystem (10) für eine Bearbeitungseinrichtung (12), mit einer Ladestation (20) zum Einschleusen mindestens eines Trägers (92) mit aufgestapelten Werkstück-Paletten (90), mit einer der Ladestation (20) nachgeordneten Bereitstellungsstation (22), in die der in die Ladestation (20) eingeschleuste Träger (92) mit den aufgestapelten Paletten (90) bewegbar ist, sowie einer Palettiereinrichtung (34), die einen beweglichen Greifer (86) zum Umstapeln und Quervertakten der Paletten (90) von der Bereitstellungsstation (22) in die Wartestation (24) aufweist, wobei der Greifer (86) auch zum Transport des Trägers (92) von der Ladestation (20) in die Bereitstellungsstation (22) sowie auch zum Transport des Trägers (92) von der Wartestation (24) in die Entladestation (26) Verwendung findet.

## Beschreibung

Die Erfindung betrifft ein Werkstückhandhabungssystem für eine Bearbeitungseinrichtung, mit einer Ladestation zum Einschleusen mindestens eines Trägers in das System, auf dem mehrere, aufeinander gestapelte Werkstück-Paletten mit von der Bearbeitungseinrichtung zu bearbeitenden Werkstücken angeordnet sind, mit einer der Ladestation nachgeordneten Bereitstellungsstation, in die der in die Ladestation eingeschleuste Träger transportierbar ist, mit einer nahe der Bereitstellungsstation angeordneten Palettiereinrichtung, die einen beweglichen Greifer aufweist, der zum Aufnehmen jeweils einer Palette des auf dem in der Bereitstellungsstation befindlichen Träger angeordneten Stapels und zum Ablegen der aufgenommenen Palette in einer der Bereitstellungsstation benachbarten Wartestation dient, und mit einer nahe der Palettiereinrichtung angeordneten Ladeeinrichtung zum Handhaben der Werkstücke zwischen der jeweils oben im Stapel angeordneten Palette und der Bearbeitungseinrichtung. Ferner betrifft die Erfindung ein Verfahren nach dem Anspruch 13 zum Handhaben von Werkstücken sowie ein Werkstückhandhabungssystem nach dem Oberbegriff des Anspruchs 19.

Bei der Bearbeitung von Werkstücken werden zunehmend automatische Bearbeitungseinrichtungen, wie beispielsweise CNC-Werkzeugmaschinen eingesetzt, bei denen neben dem automatischen Werkzeugwechsel auch die Werkstückbeschickung automatisiert ist. Da die Handhabungszeit während der Fertigung in der Regel den größten Anteil an den Nebenzeiten aufweist, ist eine Kürzung der Handhabungszeiten einer der wichtigsten Ansatzpunkte für eine Rationalisierung in der Fertigung.

Aus der DE 44 09 532 C2 ist ein Werkstückhandhabungssystem der eingangs genannten Art bekannt. Bei diesem bekannten System wird ein verfahrbarer Träger mit aufgestapelten Paletten zunächst in eine Ladestation in das System eingeschleust und anschließend mit Hilfe eines Drehtisches in eine Bereitstellungsstation bewegt. Eine nahe der Bereitstellungsstation angeordnete Palettiereinrichtung stapelt den Palettenstapel in eine Wartestation um. Anschließend entnimmt die Palettiereinrichtung der Wartestation jeweils eine Palette und hält sie für eine Ladeeinrichtung bereit, die die Handhabung der Werkstücke zwischen der bereitgehaltenen Palette und einer Bearbeitungseinrichtung vornimmt. Nachdem sämtliche Werkstücke aus der bereitgehaltenen Palette bearbeitet und wieder in die Palette zurückgelegt worden sind, legt die Palettiereinrichtung die Palette auf den leeren Träger in der Bereitstellungsstation ab und nimmt eine neue Palette aus der Wartestation auf. Dieser Vorgang wird solange wiederholt, bis sämtliche Paletten aus der Wartestation in die Bereithaltestation zurückgestapelt worden sind. Anschließend bewegt der Drehtisch den Palettenstapel mit den fertig bearbeiteten Werkstücken zurück in die Ladestation, aus der der Träger mit den Paletten entnommen werden kann, während er gleichzeitig einen zuvor in die Ladestation eingeschleusten zweiten Träger mit aufgestapelten Paletten in die Bereitstellungsstation bewegt.

Bei diesem bekannten Werkstückhandhabungssystem ist vor allem nachteilig, daß die Versorgung der Bearbeitungseinrichtung mit Werkstücken durch die Ladeeinrichtung unterbrochen ist, solange die Palettiereinrichtung die Paletten von der Bereitstellungsstation in die Wartestation umstapelt. Dadurch ergeben sich vergleichsweise hohe Nebenzeiten, während gleichzeitig die Gefahr besteht, daß bei kurzen Hauptzeiten die Bearbeitung der Werkstücke durch die Bearbeitungseinrichtung unterbrochen ist. Auch ist es nicht möglich, das Umstapeln der Paletten von der Versorgung der Bearbeitungseinrichtung zu entkoppeln, da die Palettiereinrichtung die Paletten für die Ladeeinrichtung bereithalten muß, während die Ladeeinrichtung die Bearbeitungseinrichtung mit Werkstücken versorgt.

Es ist Aufgabe der Erfindung, ein Werkstückhandhabungssystem bzw. ein Verfahren zum Handhaben von Werkstücken bereitzustellen, bei dem auf einfache Weise die Nebenzeiten verkürzt sind.

Die Aufgabe wird bei einem Werkstückhandhabungssystem der eingangs genannten Art dadurch gelöst, daß der Greifer der Palettiereinrichtung zum Transport des Trägers von der Ladestation in die Bereitstellungsstation dient. Ferner wird die Aufgabe durch ein Verfahren mit den Merkmalen nach Anspruch 13 sowie durch ein Werkstückhandhabungssystem mit den Merkmalen nach Anspruch 19 gelöst.

Bei der Erfindung erfüllt die Palettiereinrichtung eine Doppelfunktion. Einerseits dient sie zum Umstapeln der Paletten von der Bereitstellungsstation in die Wartestation, damit die Ladeeinrichtung der jeweils oben im Stapel angeordneten Palette Werkstücke entnehmen bzw. in diese nach der Bearbeitung ablegen kann. Andererseits arbeitet die Palettiereinrichtung als Fördereinrichtung, mit der der in der Ladestation befindliche Träger in die Bereitstellungsstation transportiert wird. Durch diese Doppelfunktion der Palettiereinrichtung kann zumindest zwischen der Ladestation und der Bereitstellungsstation auf zusätzliche Transporteinrichtungen verzichtet werden, so daß der Platzbedarf verglichen mit bekannten Handhabungssystemen geringer ist und die Transportwege zwischen den einzelnen Stationen verkürzt sind. Durch die kürzeren Transportwege ergeben sich wiederum verkürzte Taktzeiten zwischen den einzelnen Stationen, die zu einer Verkürzung der Nebenzeiten führen. Ferner ist sowohl der Transport der Träger als auch der Transport der Paletten zwischen den einzelnen Station zumindest zeitweise von der Versorgung der Bearbeitungseinrichtung entkoppelt, da die Palettiereinrichtung einen weiteren Träger in die Bereitstellungsstation fördern oder eine Palette umstapeln kann, sobald die Ladeeinrichtung ein Werkstück zur Bearbeitungseinrichtung transportiert, wodurch sich die Nebenzeiten weiter verkürzen.

Als Träger für das Werkstückhandhabungssystem werden beispielsweise fahrbare Palettenwagen eingesetzt. Ferner ist es möglich, Trägerplatten zu verwenden, die auf nichtangetriebenen und/oder angetriebenen Rollenbahnen bewegt werden, die durch das Werkstückhandhabungssystem verlaufen.

Die Paletten werden üblicherweise in der Wartestation zu neuen Palettenstapeln gestapelt. Alternativ ist es auch möglich, in der Wartestation eine angetriebene Fördereinrichtung, wie beispielsweise einen Rollenförderer, einen Kettenförderer oder ähnliches, anzuordnen, die die Paletten einzeln abtransportiert.

Vorteilhafte Weiterbildungen der Erfindung sind in der Beschreibung, den Figuren sowie den Unteransprüchen angegeben.

So ist es besonders vorteilhaft, wenn der Greifer mindestens ein Koppelelement aufweist, mit dem der in der Ladestation befindliche Träger an den Greifer angekoppelt und in die Bereitstellungsstation geschleppt wird, da durch das Koppelelement eine sichere Verbindung des Trägers mit dem Greifer während des Transportes gewährleistet ist.

Als Koppelelement wird zum Beispiel die Verwendung eines Hakens vorgeschlagen, der durch eine vorprogrammierte Bewegung des Greifers in eine entprechend gestaltete Kontur oder Öffnung am Träger eingehakt bzw. aus dieser ausgehakt wird. Dies stellt eine sehr einfache und gleichzeitig sichere Art dar, um den Greifer mit dem Träger lösbar zu verbinden. Alternativ kann auch ein betätigbarer Haken, Bolzen oder Hebel verwendet werden, der mit Hilfe eines beispielsweise durch die Steuerung der Palettiereinrichtung angesteuerten Aktuators zwischen einer Kopplungsstellung und einer Freigabestellung bewegbar ist oder der durch die Bewegung des Greifers automatisch an- und abkoppelt.

Ferner ist es von Vorteil, wenn der Greifer der Palettiereinrichtung entlang zweier rechtwinklig zueinander verlaufender Achsen bewegbar ist, wobei eine der Achsen vorzugsweise in horizontaler Richtung und die zweite Achse vorzugsweise in vertikaler Richtung verläuft. Da der Greifer bei dieser Ausführungsform der Palettiereinrichtung in nur einer Ebene bewegt wird, ist der Platzbedarf der Palettiereinrichtung vergleichsweise gering. Ferner sind für die Bewegung des Greifers und zum Ein- und Ausschleusen der Stapel insgesamt nur zwei Antriebe erforderlich.

Bei einer bevorzugten Ausführungsform des Werkstückhandhabungssystems dient der den Träger von der Ladestation in die Bereitstellungsstation transportierende Greifer zum Verschieben eines gegebenenfalls bereits in der Bereitstellungsstation befindlichen zweiten Trägers in die Wartestation. Dadurch kann auf eine zusätzliche Transporteinrichtung verzichtet werden, die den in der Bereitstellungsstation befindlichen Träger in die Wartestation transportiert.

Als Weiterbildung dieser Ausführungsform wird vorgeschlagen, den Greifer zusätzlich zum Verschieben eines gegebenenfalls bereits in der Wartestation befindlichen dritten Trägers in eine der Wartestation unmittelbar benachbarten Entladestation zu verwenden, die zum Ausschleusen der Träger aus dem System dient. Auch hier kann durch die Mehrfachfunktion des Greifers der Palettiereinrichtung auf zusätzliche Transporteinrichtungen verzichtet werden. Ferner bildet die Entladestation eine Art Zwischenpuffer, in dem Paletten mit bereits bearbeiteten Werkstücken aufbewahrt werden. Auf diese Weise ist das Bereithalten und Umstapeln der in der Bereitstellungsstation und der Wartestation befindlichen Paletten von dem Ausschleusen der Paletten mit bearbeiteten Werkstücken zumindest zeitweise entkoppelt, so daß die Bearbeitung der Werkstücke nicht unterbrochen wird, wenn der Maschinenbediener die Paletten mit bearbeiteten Werkstücken nicht unmittelbar nach dem letzten Umstapeln aus dem System ausschleust.

Bei einer alternativen Weiterbildung der Ausführungsform des Werkstückhandhabungssystems kann zwischen der Wartestation und der Entladestation eine Verschiebeeinrichtung vorgesehen sein, die den Träger mit aufgestapelten Paletten von der Wartestation in die Entladestation bewegt, aus der die Träger anschließend aus dem System ausgeschleust werden. Durch Verwendung einer Verschiebeeinrichtung ist es möglich, die sich unmittelbar an die Wartestation anschließende Entladestation quer zur Transportrichtung des Trägers, in der der Träger zwischen der Ladestation und der Bereitstellungsstation bewegbar ist, anzuordnen. Diese als Karree-Anordnung bezeichnete Gestaltung des Werkstückhandhabungssystems hat den Vorteil, daß das Ein- und Ausschleusen der Werkstücke von derselben Seite des Handhabungssystems vorgenommen werden kann, so daß die zu bearbeitenden und die bereits fertig bearbeiteten Werkstücke auf demselben Transportweg transportiert werden können.

Alternativ kann bei der Karree-Anordnung die Wartestation eine Ablage als Zwischenpuffer aufweisen, auf der die Paletten stapelbar sind. Bei dieser Weiterbildung schließt sich die Entladestation unmittelbar an die Bereitstellungsstation an, wobei eine Verschiebeeinheit zwischen der Bereitstellungsstation und der Entladestation den Transport des Trägers zwischen diesen vornimmt. Während des Betriebes des Werkstückhandhabungssystems werden die auf dem in der Bereitstellungsstation angeordneten Träger aufgestapelten Paletten nacheinander auf die Ablage in der Wartestation gestapelt. Sobald die Werkstücke in der untersten Palette des Stapels von der Bearbeitungsmaschine bearbeitet worden sind, stapelt die Palettiereinrichtung die in der Wartestation befindlichen Paletten zurück auf den Träger in der Bereitstellungsstation. Nach dem Umstapeln wird der Träger mit Hilfe der Verschiebeeinrichtung von der Bereitstellungsstation in die Entladestation gefördert.

Insbesondere um die zuvor beschriebenen verschiedenen Funktionen der Palettiereinrichtung, wie das Umstapeln der Paletten sowie das Schleppen und Schieben der Träger, störungsfrei durchführen zu können, wird ferner vorgeschlagen, als Greifer einen geschlossenen Rahmen mit einer Rahmenöffnung zu verwenden, deren Innenumfangsabmessungen etwas größer sind als die Außenabmessungen der zu stapelnden Paletten. Zum Erfassen und Halten der aufgenommen Palette ist am Rahmen mindestens eine Verriegelungseinrichtung vorgesehen, die mit der Palette in Eingriff gebracht wird, wenn die Palette bei abgesenktem Rahmen zumindest teilweise durch die Rahmenöffnung ragt. Alternativ kann der Greifer U-förmig ausgebildet sein, d. h. einen an einer Seite offenen Rahmen bilden, der mit der Palette zum Umstabeln in Eingriff gebracht wird.

Des weiteren wird vorgeschlagen, in der Ladestation, der Bereitstellungsstation, der Wartestation und/oder der Entladestation mindestens eine Verstellsicherung vorzusehen, die den in der Lade-, der Bereitstellungs-, der Warte- bzw. der Entladestation befindlichen Träger in einer vorgegebenen Stellung hält. Dadurch wird sichergestellt, daß sich der Träger während des Umstapelns nicht aus seiner vorgegebenen Stellung bewegt und der Greifer jede Palette ordnungsgemäß erfassen und absetzen kann. Als Verstellsicherung dient beispielsweise ein in einer bodenseitigen Aufnahme schwenkbar gelagerter oder am Boden verdrehbar gelagerter Anschlag, der durch eine Feder vorgespannt ist und gegen den der Träger bewegt wird. Erst wenn die Palettiereinrichtung den Träger transportiert, wird der Anschlag durch die Kraft der Palettiereinrichtung in seine beispielsweise im Hallenboden versenkte Aufnahme zurückgeschwenkt bzw. zurückgeschoben. Alternativ kann auch ein durch einen Aktuator betätigbarer Anschlag, wie beispielsweise ein Haken, ein Bolzen oder ein Hebel verwendet werden, der von der Steuerung der Palettiereinrichtung aktiviert wird. Ferner ist es möglich, die Verstellsicherung z. B. durch die Bewegung des Greifers automatisch zu entriegeln bzw. zu verriegeln.

Gemäß einem weiteren Aspekt der Erfindung wird ein Werkstückhandhabungssystem für eine Bearbeitungseinrichtung vorgeschlagen, bei dem nur eine Ladestation zum Ein- und Ausschleusen eines Trägers mit aufeinander gestapelten Werkstück-Paletten vorgesehen ist. Nahe der Ladestation ist eine Palettiereinrichtung zum Umstapeln der Paletten angeordnet, in deren Nähe eine Ladeeinrichtung angeordnet ist, die zum Handhaben der einzelnen Werkstücke zwischen der Ladestation und der Bearbeitungseinrichtung dient. Der Träger weist mindestens zwei Stapelpositionen auf, auf denen die Paletten aufgestapelt werden können. Während des Handhabungsvorganges nimmt die Palettiereinrichtung jeweils die oberste Palette von der einen der beiden Stapelpositionen auf und legt sie auf der anderen Stapelposition des Trägers ab. Wurden sämtliche Werkstücke bearbeitet, wird der Träger aus der Ladestation ausgeschleust. Dieses vereinfachte Werkstückhandhabungssystem eignet sich insbesondere für kleine und mittlere Fertigungsserien.

Nachfolgend wird die Erfindung anhand von Ausführungsbeispielen unter Bezugnahme auf die beigefügte Zeichnung näher erläutert. Darin zeigen:
- Fig. 1: eine Draufsicht auf ein erstes Ausführungsbeispiel eines Werkstückhandhabungssystems in schematischer Darstellung;
- Fig. 2: eine Seitenansicht einer Palettiereinrichtung, die in dem Werkstückhandhabungssystem nach Fig. 1 verwendet wird;
- Fig. 3: eine Vorderansicht der Palettiereinrichtung nach Fig. 2;
- Fig. 4: eine Draufsicht auf ein zweites Ausführungsbeispiel eines Werkstückhandhabungssystems in schematischer Darstellung;
- Fig. 5: eine Draufsicht auf ein drittes Ausführungsbeispiel eines Werkstückhandhabungssystems in schematischer Darstellung; und
- Fig. 6: eine Seitenansicht eines Werkstückhandhabungssystems für kleine und mittlere Fertigungsserien.

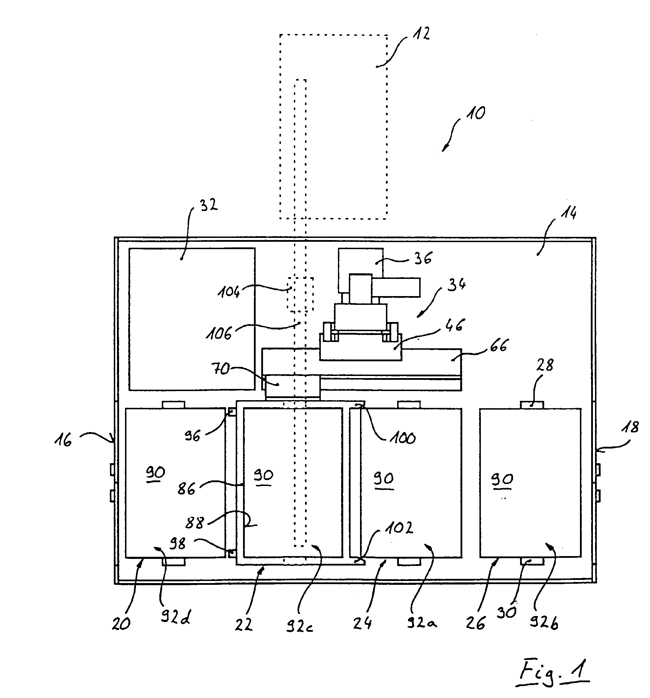

Fig. 1 zeigt eine Draufsicht auf ein erstes Ausführungsbeispiel eines Werkstückhandhabungssystems 10 für eine Bearbeitungseinrichtung 12 (gestrichelt dargestellt). Das Werkstückhandhabungssystem 10 weist einen nach außen abgeschlossenen Arbeitsraum 14 auf, der an seiner in Fig. 1 links dargestellten Seitenwand eine durch zwei Tore verschlossene Ladeöffnung 16 und an seiner dieser gegenüber angeordneten Seitenwand eine gleichfalls durch zwei Tore verschlossene Entladeöffnung 18 besitzt.

Zwischen der Ladeöffnung 16 und der Entladeöffnung 18 sind aufeinanderfolgend vier verschiedene Arbeitsstationen im Arbeitsraum 14 vorgesehen. Die in Fig. 1 links dargestellte Ladestation 20, die sich unmittelbar an die Ladeöffnung 16 anschließt, die zur Ladestation 20 benachbarte Bereitstellungsstation 22, die sich an diese anschließende Wartestation 24 sowie die zwischen der Wartestation 24 und der Entladeöffnung 18 vorgesehene Entladestation 26. Die Ladestation 20, die Bereitstellungsstation 22, die Wartestation 24 sowie die Entladestation 26 sind jeweils mit zwei einander gegenüber angeordneten Verstellsicherungen 28 und 30 ausgestattet, die jeweils durch einen von einer Steuerung 32 des Werkstückhandhabungssystems 10 betätigten Aktuator (nicht dargestellt) zwischen einer Verriegelungsstellung und einer Freigabestellung bewegt werden können.

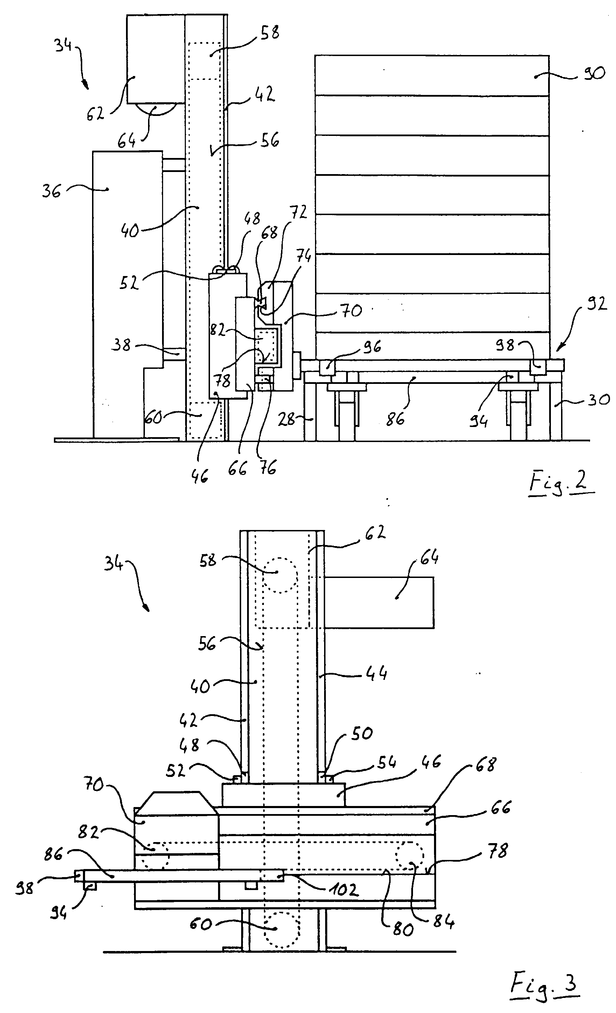

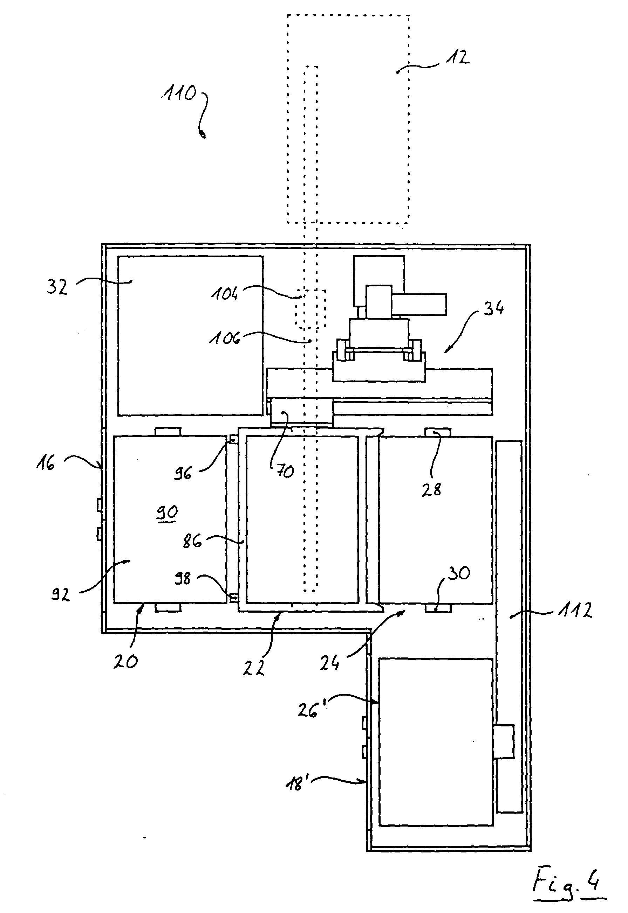

Seitlich der Bereitstellungsstation 22 und der Wartestation 24 ist eine Palettiereinrichtung 34 angeordnet, die nachfolgend unter Bezugnahme auf die Fig. 2 und 3 näher erläutert wird. Die Palettiereinrichtung 34 weist eine Säule 36 auf, an der durch Verbindungselemente 38 ein vertikal verlaufender Ständer 40 befestigt ist. Alternativ kann die Säule 36 auch einstückig mit dem Ständer 40 ausgebildet sein. An der der Säule 36 abgewandten Vorderseite des Ständers 40 sind zwei vertikal verlaufende Führungsleisten 42 und 44 befestigt, die zueinander beabstandet sind und über die linke bzw. rechte Seitenfläche des Ständers 40 ragen.

Die Führungsleisten 42 und 44 bilden eine vertikale Führung für eine Wagenplatte 46, an deren dem Ständer 40 zugewandten Rückseite Paare drehbar gelagerter Führungsrollen befestigt sind, von denen in den Fig. 2 und 3 nur die oberen Führungsrollenpaare 48 und 50 zu erkennen sind. Die beiden Rollen jedes Führungsrollenpaares 48 bzw. 50 sind mit Abstand zueinander angeordnet und rollen sich auf der Vorder- bzw. Rückseite der jeweiligen Führungsleiste 42 bzw. 44 ab. Ein seitliches Verrutschen der Wagenplatte 46 quer zur Längsrichtung der Führungsleisten 42 und 44 wird durch zwei Stützelemente 52 und 54 verhindert, die sich an den nach außen zeigenden Seitenflächen der Führungsleisten 42 und 44 abstützen.

Der Antrieb der Wagenplatte 46 erfolgt durch einen an der Wagenplatte 46 befestigten Zahnriemen 56 (gestrichelt dargestellt), der in dem Ständer 40 mit seiner Flachseite parallel zur Seitenfläche des Ständers 40 verläuft und um eine an jedem Ende des Ständers 40 drehbar gelagerte Umlenkrolle 58 und 60 (gestrichelt dargestellt) geführt ist. Der Zahnriemen 56 hat ein Befestigungselement (nicht dargestellt), das durch einen an der Vorderseite des Ständers 40 ausgebildeten Spalt (nicht dargestellt) ragt und mit der Wagenplatte 46 fest verbunden ist. Die in Fig. 1 oben dargestellte Umlenkrolle 58 wird von einer Getriebeanordnung 62 angetrieben, die ihrerseits von einem an der Getriebeanordnung 62 befestigten elektrischen Antrieb 64 angetrieben wird.

An der dem Ständer 40 abgewandten Vorderseite der Wagenplatte 46 ist eine Trägerplatte 66 befestigt bzw. angeformt, die sich quer zur vertikalen Führungsrichtung der Wagenplatte 46 erstreckt und an beiden Seiten der Wagenplatte 46 über diese hinausragt. An der Vorderseite der Trägerplatte 66 ist nahe deren oberen Seitenfläche eine Profilleiste 68 befestigt, die sich über die gesamte horizontale Länge der Trägerplatte 66 erstreckt. Die Profilleiste 68 dient als horizontale Führung für einen Schlitten 70, an dem ein Führungselement 72 mit einer Führungsaufnahme 74 befestigt ist, deren Querschnitt dem Querschnitt der Profilleiste 68 entspricht und mit der der Schlitten 70 an der Profilleiste 68 geführt ist. Nahe der unteren Kante des Schlittens 70 sind zwei mit Abstand zueinander angeordnete, drehbar gelagerte Stützrollen befestigt, von denen in Fig. 2 jedoch nur die Stützrolle 76 erkennbar ist, mit denen sich der Schlitten 70 an der Vorderseite der Trägerplatte 66 abstützt.

Der Schlitten 70 wird durch einen in einem an der Vorderseite der Trägerplatte 66 befestigten, sich über deren gesamte horizontale Länge erstrekkenden Gehäuse 78 geführten zweiten Zahnriemen 80 (gestrichelt dargestellt) angetrieben. Der Zahnriemen 80 verläuft mit seinen Flachseiten etwa rechtwinklig zur Vorderseite der Trägerplatte 66, ist gleichfalls um zwei Umlenkrollen 82 und 84 (gestrichelt dargestellt) geführt und wird von einem zweiten Antrieb (nicht dargestellt) angetrieben.

An der Vorderseite des Schlittens 70 ist ein Greiferrahmen 86 mit einer etwa rechteckigen Rahmenöffnung 88 befestigt, der mit seiner Rahmenebene in horizontaler Richtung verläuft. Der Greiferrahmen 86 dient unter anderem zum Aufnehmen und Absetzen von einzelnen Paletten 90, die aufeinander gestapelt auf einem fahrbaren Palettenwagen 92 angeordnet sind. Die Rahmenöffnung 88 ist dabei so bemessen, daß beim vertikalen Absenken des Greiferrahmens 86 sowohl die Paletten 90 als auch die rechteckige Grundplatte des Palettenwagens 92 durch die Rahmenöffnung 88 hindurchragen können, ohne den Greiferrahmen 86 zu berühren. Zum Greifen einzelner Paletten 90 sind an der Unterseite des Greiferrahmens 86 mehrere betätigbare Verriegelungselemente 94 vorgesehen, die von der Steuerung 32 des Werkstückhandhabungssystems 10 betätigt werden.

Wie Fig. 1 zeigt, sind an der der Ladestation 20 zugewandten Seitenkante des Greiferrahmens 86 zwei zueinander beabstandete Koppelelemente 96 und 98 befestigt. Jedes Koppelelement 96 und 98 hat eine zwischen einer Kopplungsstellung und einer Freigabestellung bewegbare Kopplungseinrichtung, die beispielsweise von einem von der Steuerung der Palettiereinrichtung 34 angesteuerten Aktuator betätigt wird. Von der der Wartestation 24 zugewandten Seitenkante des Greiferrahmens 86 stehen zwei horizontal verlaufende Auskragungen 100 und 102 ab, die in die linke bzw. rechte Stirnseite des Greiferrahmens 86 übergehen. Wie Fig. 1 weiter zeigt, ist die Länge der Trägerplatte 66 und damit die Länge der horizontalen Führung für den Schlitten 70 mit dem daran befestigten Greiferrahmen 86 so bemessen, daß der Greiferrahmen 86 eine einzelne Palette 90 von der Bereitstellungsstation 22 in die Wartestation 24 umstapeln kann. Ferner kann der Schlitten 70 gegebenenfalls mit seinem Greiferrahmen 86 über die Bereitstellungsstation 22 hinaus in Richtung der Ladestation 20 um eine etwa dem Abstand zwischen der Ladestation 20 und der Bereitstellungsstation 22 entsprechenden Kopplungshub bewegt werden, um den Palettenwagen 92 an den Greiferrahmen 86 anzukoppeln.

Nachfolgend wird die Funktionsweise des Werkstückhandhabungssystems 10 unter Bezugnahme auf Fig. 1 näher erläutert. Zunächst wird ein erster Palettenwagen 92a durch die Ladeöffnung 16 in die Ladestation 20 geschoben und anschließend werden die Tore verschlossen. Sobald die Tore geschlossen sind, verriegelt die Steuerung 32 die Verstellsicherungen 28 und 30 der Ladestation 20 und aktiviert die Palettiereinrichtung 34. Die Palettiereinrichtung 34 bewegt den Schlitten 70 mit dem Greiferrahmen 86 in horizontaler Richtung in seine Endposition in Richtung der Ladestation 20. Anschließend senkt die Palettierenrichtung 34 den Schlitten 70 in die unterste vertikale Position ab, in der die Koppelelemente 96 und 98 etwa auf Höhe des Grundplatte des Palettenwagens 92a angeordnet sind. In dieser Position aktiviert die Steuerung der Palettiereinrichtung 34 die Aktuatoren der Koppelelemente 96 und 98, die die Koppeleinrichtungen von der Freigabestellung in die Kopplungsstellung bewegt. Die Koppeleinrichtung jedes Koppelelementes 96 und 98 kommt dabei mit einer an der Grundplatte des Palettenwagens 92a ausgebildeten Kontur (nicht dargestellt) in Eingriff, so daß der Palettenwagen 92a an den Greiferrahmen 86 angekoppelt ist.

Nachdem der Kopplungsvorgang abgeschlossen ist und die Verstellsicherungen 28 und 30 geöffnet worden sind, wird der Schlitten 70 horizontal entlang der Profilleiste 68 in Richtung der Bereitstellungsstation 22 bewegt, wobei der Palettenwagen 92a von dem Greiferrahmen 86 mitgeschleppt wird. Sobald der Palettenwagen 92a die Bereitstellungsstation 22 erreicht hat, aktiviert die Steuerung 32 die Verstellsicherungen 28 und 30 in der Bereitstellungsstation 22, wodurch der Palettenwagen 92a in der Bereitstellungsstation 22 verriegelt wird. Anschließend verfährt die Palettiereinrichtung 34 den Greiferrahmen 86 vertikal und horizontal derart, bis die Rahmenöffnung 88 am Greiferrahmen 86 die obere Palette 90 umschließt. Danach werden die Verriegelungselemente 94 für den Palettenaushub verriegelt und die erfaßte Palette 90 in eine Abholposition vertikal angehoben.

In dieser Abholposition der Palette 90 beginnt ein Portalroboter 104 (gestrichelt dargestellt), dessen Portal 106 sich quer zur Transportrichtung des Palettenwagens 92a zwischen der Bearbeitungseinrichtung 12 und der Bereitstellungsstation 22 erstreckt, einzelne, zu bearbeitende Werkstücke aus der von der Palettiereinrichtung 34 angehobenen Palette 90 zu entnehmen und der Bearbeitungseinrichtung 12 zuzuführen. Nach der Bearbeitung durch die Bearbeitungseinrichtung 12 wird das bearbeitete Werkstück vom Portalroboter 104 wieder in die Palette 90 zurückgelegt und ein weiteres zu bearbeitendes Werkstück entnommen. Dieser Vorgang wird solange wiederholt, bis sämtliche Werkstücke in der oberen Palette 90 bearbeitet worden sind. Anschließend transportiert die Palettiereinrichtung 34 die Palette 90 von der Bereitstellungsstation 22 in die Wartestation 24 und legt die Palette 90 mit den fertig bearbeiteten Werkstücken auf einen leeren zweiten Palettenwagen 92b ab, der zuvor mit Hilfe der Palettiereinrichtung 34 in die Wartestation 24 bewegt worden war.

Das Bearbeiten der Werkstücke und das Umstapeln der Paletten 90 wird solange wiederholt, bis der Palettenstapel auf dem ersten Palettenwagen 92a in der Bereitstellungsstation 22 auf den zweiten Palettenwagen 92b in der Wartestation 24 umgestapelt worden ist. Die Quervertaktung der Paletten 90 zwischen der Bereitstellungsstation 22 und der Wartestation 24 übernimmt also die Palettiereinrichtung 34. Anschließend wird der Greiferrahmen 86 von der Palettiereinrichtung 34 wieder in seine Kopplungsstellung bewegt, in der er mit seinen Koppelelementen 96 und 98 an einen bereits in der Ladestation 20 befindlichen dritten Palettenwagen 92c mit aufgestaptelten Paletten 90 angekoppelt werden kann, während der in der Bereitstellungsstation 22 angeordnete erste Palettenwagen 92a durch die Rahmenöffnung 88 des abgesenkten Greiferrahmens 86 ragt.

Danach werden sämtliche Verstellsicherungen 28 und 30 der Ladestation 20, der Bereitstellungsstation 22 und der Wartestation 24 geöffnet. Sobald der Schlitten 70 der Palettiereinrichtung 34 horizontal in Richtung der Wartestation 24 bewegt wird, zieht der Greiferrahmen 86 den inzwischen angekoppelten dritten Palettenwagen 92c von der Ladestation 20 in die Bereitstellungsstation 22, während er gleichzeitig den jetzt leeren, ersten Palettenwagen 92a von der Bereitstellungsstation 22 in die Wartestation 24 und den zweiten Palettenwagen 92b mit Hilfe der Auskragungen 100 und 102, die an der Grundplatte des zweiten Palettenwagens 92b einfädeln, von der Wartestation 24 in die Entladestation 26 bewegt. Anschließend werden die Verstellsicherungen 28 und 30 wieder aktiviert, um die Palettenwagen 92a, 92b und 92c in ihren jeweiligen Arbeitsstationen 22, 24 bzw. 26 zu sichern.

Nachdem die Palettenwagen 92a, 92b und 92c gesichert worden sind, hebt die Palettiereinrichtung 34 die oberste Palette 90 des auf dem in der Bereitstellungsstation 22 plazierten Palettenwagens 92c angeordneten Palettenstapels in die Abholposition. Anschließend beginnt der Portalroboter 104 den Transport der Werkstücke von der Bereitstellungsstation 22 zur Bearbeitungseinrichtung 12 und zurück, während die Palettiereinrichtung 34 jedesmal, wenn sämtliche Werkstücke der in der Abholposition gehalteten Palette 90 bearbeitet worden sind, die Palette 90 auf den ersten Palettenwagen 92a ablegt und eine neue Palette 90 vom dritten Palettenwagen 92c aufnimmt und in die Abholposition anhebt. Gleichzeitig kann der Maschinenbediener den in der Entladestation 26 befindlichen zweiten Palettenwagen 92b durch die Entladeöffnung 18 aus dem Arbeitsraum des Werkstückhandhabungssystems 10 ausschleusen.

Sobald die Paletten 90 vollständig vom dritten Palettenwagen 92c auf den ersten Palettenwagen 92a umgestapelt worden sind, wird der zuvor beschriebene Wechsel der Palettenwagen 92 zwischen den Arbeitstationen 20, 22 und 24 wiederholt, wobei ein zwischenzeitlich in die Ladestation 20 eingeschleuster vierter Palettenwagen 92d in die Bereitstellungsstation 22 geschleppt wird, während der dritte Palettenwagen 92c in die Wartestation 24 und der erste Palettenwagen 92a in die Entladestation 26 bewegt wird, wie in Fig. 1 gezeigt.

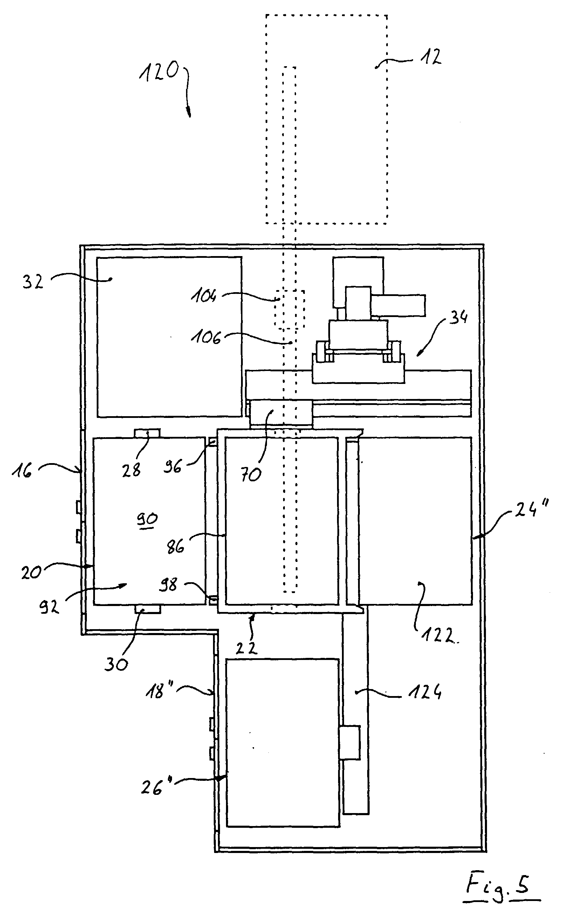

Fig. 4 zeigt ein zweites Ausführungsbeispiel eines Werkstückhandhabungssystems 110, dessen Aufbau im wesentlichen dem Aufbau des ersten Ausführungsbeispieles gleicht, so daß Komponenten des Werkstückhandhabungssystems 110, die zu Komponenten des ersten Ausführungsbeispieles identisch sind, mit identischen Bezugszeichen bezeichnet sind. Der Unterschied zwischen den beiden Ausführungsbeispielen besteht darin, daß die Entladestation 26' neben der Wartestation 22 angeordnet ist und der Palettenwagen 92 mit Hilfe einer Verschiebeeinheit 112 von der Wartestation 22 in die Entladestation 26' bewegt wird. Ferner ist die Entladeöffnung 18' an derselben Seite des Arbeitsraumes 14 angeordnet wie die Ladeöffnung 16.

Die Arbeitsweise des zweiten Ausführungsbeispieles entspricht im wesentlichen der des ersten Ausführungsbeipieles, sofern sie den Transport der Palettenwagen 92 von der Ladestation 20 in die Bereitstellungsstation 22 und von der Bereitstellungsstation 22 in die Wartestation 24 betrifft, so daß auf die diesbezüglichen Ausführungen für das erste Ausführungsbeispiel Bezug genommen werden kann.

Der Transport des Palettenwagens 92 von der Wartestation 24 in die Entladestation 26' erfolgt dagegen mit der von der Steuerung 32 angesteuerten Verschiebeeinheit 112, die, sobald der in der Wartestation 24 befindliche Palettenwagen 92 vollständig mit Paletten 90 beladen ist, den Palettenwagen 92 erfaßt und in die Entladestation 26' zieht. Erst nachdem der Palettenwagen 92 aus der Wartestation 24 in die Entladestation 26' bewegt worden ist, aktiviert die Steuerung 32 die Palettiereinrichtung 34, die ihrerseits mit Hilfe des Greiferrahmens 86 den in der Bereitstellungsstation 22 angeordneten Palettenwagen 92 in die Wartestation 24 mitnimmt, während sie gleichzeitig den in der Ladestation 20 befindlichen Palettenwagen 92 in die Bereitstellungsstation 22 schleppt.

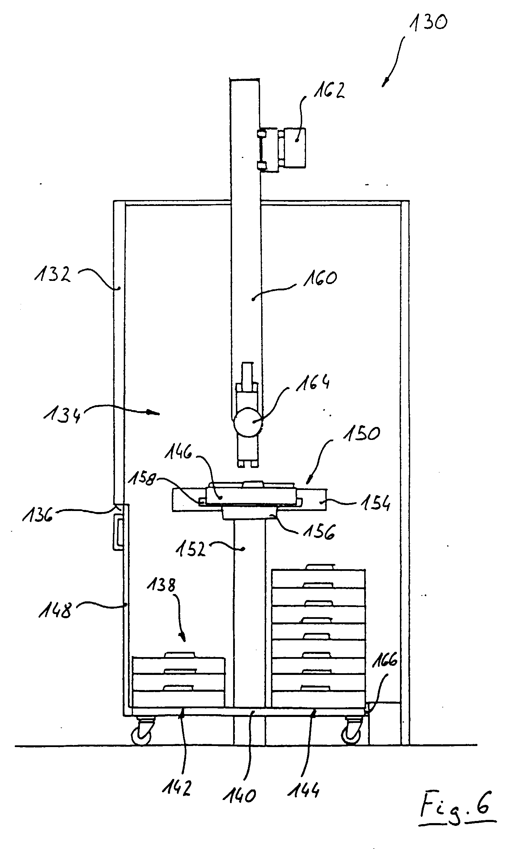

Fig. 5 zeigt ein drittes Ausführungsbeispiel eines Werkstückhandhabungssystems 120, das im wesentlichen dem in Fig. 4 gezeigten, zweiten Ausführungsbeispiel gleicht. Beim dritten Ausführungsbeispiel ist jedoch in der Wartestation 24'' eine starre Auflage 122 angeordnet, so daß der Palettenwagen 92 nicht in die Wartestation 24'' bewegt werden kann. Ein weiterer Unterschied besteht darin, daß die Entladestation 26'' neben der Bereitstellungsstation 22 angeordnet ist und der Palettenwagen 92 mit Hilfe einer Verschiebeeinheit 124 von der Bereitstellungsstation 22 in die Entladestation 26'' bewegt wird.

Die Arbeitsweise des dritten Ausführungsbeispieles entspricht im wesentlichen der des ersten bzw. zweiten Ausführungsbeipieles, sofern sie den Transport der Palettenwagen 92 von der Ladestation 20 in die Bereitstellungsstation 22 betrifft, so daß auf die diesbezüglichen Ausführungen für das erste Ausführungsbeispiel Bezug genommen werden kann.

Wie zuvor bereits erläutert erfolgt dagegen kein Transport des Palettenwagens 92 von der Bereitstellungsstation 22 in die Wartestation 24''. Vielmehr werden die Paletten 90 nacheinander auf die starre Ablage 122 in der Wartestation 24'' gestapelt. Dabei hält die Palettiereinrichtung 34 zunächst jede Palette 90 in der Abholposition, während der Portalroboter 104 nur einen Teil der Werkstücke, beispielsweise die Hälfte der Werkstücke, der Bearbeitungseinrichtung 12 zuführt. Nachdem die bearbeiteten Werkstücke in die Palette 90 abgelegt worden sind, wird die Palette 90 von der Palettiereinrichtung 34 auf die starre Ablage 122 in der Wartestation 24'' abgelegt. Sobald die Werkstücke aus der untersten Palette 90 des Stapels auf dem in der Bereitstellungsstation 22 befindlichen Palettenwagens 92 von der Bearbeitungseinrichtung 12 vollständig bearbeitet worden sind, werden die auf der Ablage 122 aufgestapelten Paletten 90 von der Palettiereinrichtung 34 nach und nach wieder auf den Palettenwagen 92 in der Bereitstellungsstation 22 zurückgestapelt, wobei, wie beim zuvor beschrieben Hinstapeln, jede Palette 90 von der Palettiereinrichtung 34 in der Abholposition gehalten wird, damit die noch nicht bearbeiteten Werkstücke vom Portalroboter 106 entnommen und der Bearbeitungseinrichtung 12 zugeführt werden können. Alternativ ist es möglich, die Palettiereinrichtung 34 und den Portalroboter 106 so anzusteuern, daß die Palette 90 erst auf die Ablage 122 abgelegt wird, wenn sämtliche Werkstücke in der bereitgehalteten Palette 90 bearbeitet worden sind. Anschließend wird der Plattenwagen 92 mit den fertig bearbeiteten Werkstücken von den Verstellsicherungen 28 und 30 freigeben und durch die Verschiebeeinheit 124 von der Bereitstellungstation 22 in die Entladestation 26'' transportiert.

Sobald sich der Palettenwagen 92 in der Entladestation 26'' befindet, aktiviert die Steuerung 32 erneut die Palettiereinrichtung 34, die ihrerseits mit Hilfe des Greiferrahmens 86 den in der Ladestation 20 befindlichen Palettenwagen 92 in die Bereitstellungsstation 22 schleppt.

Die zuvor beschriebenen Ausführungsbeispiele stellen nur mögliche Anordnungen der einzelnen Arbeitsstationen zueinander dar. So können zum Beispiel mehrere Palettiereinrichtungen zur Bildung einer Transferstraße nebeneinander angeordnet werden, wobei die Wartestation oder Entladestation der einen Palettiereinrichtung als Bereitstellungsstation für eine nachfolgend angeordnete weitere Palettiereinrichtung dient. Ferner können anstelle fahrbarer Palettenwagen Trägerplatten für die Paletten verwendet werden, die auf nichtangetriebenen und/oder angetriebenen Rollenbahnen bewegt werden.

Fig. 6 zeigt eine Seitenansicht eines Werkstückhandhabungssystems 130 für kleine und mittlere Fertigungsserien. Das Werkstückhandhabungssystem weist eine durch Schutzwände 132 nach außen begrenzte Ladestation 134 auf. An der in Fig. 6 links dargestellten Schutzwand 132 ist eine Öffnung 136 zum Ein- und Ausschleusen eines fahrbaren Palettenwagens 138 ausgebildet. Der Palettenwagen 138 weist eine Grundplatte 140 auf, auf der zwei Stapelpositionen 142 und 144 für Werkstück-Paletten 146 ausgebildet sind. An der in Fig. 6 links dargestellten Stirnseite des Palettenwagens 138 steht rechtwinklig nach oben ein Verkleidungselement 148 ab, das, wie Fig. 6 zeigt, so bemessen ist, daß es die Öffnung 136 verschließt, wenn der Palettenwagen 138 in eine Bereitstellungsposition in der Ladestation 134 bewegt ist.

In der Ladestation 134 ist eine Palettiereinrichtung 150 angeordnet, deren Aufbau im wesentlichen dem Aufbau der zuvor beschriebenen Palettiereinrichtungen entspricht. Die Palettiereinrichtung 150 weist einen vertikal verlaufenden Ständer 152 auf, an dem eine Trägerplatte 154 verschieblich gelagert ist, die beispielsweise mit Hilfe eines Zahnriemens (nicht dargestellt) senkrecht nach oben und unten stufenlos entlang des Ständers 152 bewegt werden kann. An der Trägerplatte 154 ist ein Schlitten 156 verschieblich gelagert, der in horrizontaler Richtung entlang der Trägerplatte 154 verfahrbar ist. Am Schlitten 156 ist ein Greiferrahmen 158 befestigt, der zum Aufnehmen und Absetzen einzelner Paletten 146 dient. Anstelle der beschriebenen Palettiereinrichtung 146 können auch anders gestaltete Palettiereinrichtungen eingesetzt werden, die ein vertikales Aufnehmen und Absetzen der Paletten 146 ermöglichen.

Gleichfalls im Bereich der Ladestation 134 ist über der Palettiereinrichtung 150 ein Portalroboter 160 angeordnet, dessen Portal 162 sich quer zur Bewegungsrichtung des Schlittens 156 der Palettiereinrichtung 150 erstreckt und zum Handhaben von Werkstücken zwischen der Ladestation 134 und einer benachbarten Bearbeitungseinrichtung (nicht dagestellt) dient. Der Portalroboter 160 hat an seinem freien unteren Ende einen Doppelgreifer 164, der um eine horizontal verlaufende Achse schwenkbar ist und zum Aufnehmen und Ablegen von Werkstücken dient.

Nachfolgend wird die Funktionsweise des Werkstückhandhabungssystems 130 näher erläutert. Zunächst wird der mit Werkstück-Paletten 146 beladene Palettenwagen 138 von einem Werker soweit in die Ladestation 134 gefahren, bis der Palettenwagen 138 in seiner Bereitstellungspostion angelangt ist, in der mit seiner in Fig. 6 rechts dargestellten Stirnseite an einem Anschlag 166 zur Anlage kommt. Anschließend wird der Palettenwagen 138 mit Hilfe einer Verstellsicherung (nicht dargestellt) in seiner Bereitstellungsposition verriegelt. Der Palettenwagen 138 ist so mit Paletten 146 beladen, daß ein Stapel Paletten 146 auf der einen der beiden Stapelpositionen 142 bzw. 144 angeordnet ist, während die andere Stapelposition 144 bzw. 142 leer ist.

Sobald der Palettenwagen 138 in seiner Bereitstellungsposition verriegelt ist, wird das Werkstückhandhabungssystem 130 automatisch oder durch den Werker aktiviert. Nach dem Aktivieren des Werkstückhandhabungssystems 130 nimmt der Greiferrahmen 158 die oben im Stapel angeordnete Palette 146 mit zu bearbeitenden Werkstücken auf und transportiert sie in eine Abholposition (vgl. Fig. 6), in der die Palette 146 unmittelbar unter dem Portalroboter 160 derart angeordnet ist, daß der Doppelgreifer 164 des Portalroboters 160 ein Werkstück aufnehmen und zur Bearbeitungseinrichtung transportieren kann. Nach der Bearbeitung des Werkstücks durch die Bearbeitungseinrichtung legt der Portalroboter 160 das bearbeitete Werkstück wieder in der Palette 146 ab und nimmt ein weiteres zu bearbeitendes Werkstück auf. Durch die Verwendung des Doppelgreifers 164, der gleichzeitig zwei Werkstücke halten kann, ist es möglich, beispielsweise ein zu bearbeitendes Werkstück aus der Palette 146 zu entnehmen, während der Doppelgreifer 164 gleichzeitig ein bearbeitetes Werkstück zum Ablegen in die Palette 146 bereithält. Dadurch wird der Transportaufwand zusätzlich verringert und die Nebenzeiten verkürzt.

Sobald sämtliche Werkstücke in der von der Palettiereinrichtung 150 gehalteten Palette 146 bearbeitet worden sind, legt der Griferrahmen 158 der Palettiereinrichtung 150 die Palette 146 auf der leeren Stapelposition 144 bzw. 142 ab. Anschließend nimmt der Greiferrahmen 158 die nächste Palette 146 mit zu bearbeitenden Werkstücken vom Stapel auf und hält sie in der Abholposition für den Portalroboter 160 bereit.

Der zuvor beschriebene Vorgang wird solange wiederholt, bis sämtliche Paletten 146 von der einen Stapelposition 142 bzw. 144 auf die andere Stapelposition 144 bzw. 142 umgestapelt worden sind. Anschließend kann der Werker nach dem Öffnen der Verstellsicherung den Palettenwagen 138 mit den bearbeiteten Werkstücken aus der Ladestation 134 ziehen und durch einen weiteren Palettenwagen 138 mit zu bearbeitenden Werkstükken ersetzen.

### Bezugszeichenliste

- 10: Werkstückhandhabungssystem
- 12: Bearbeitungseinrichtung
- 14: Arbeitsraum
- 16: Ladeöffnung
- 18: Entladeöffnung
- 20: Ladestation
- 22: Bereitstellungsstation
- 24: Wartestation
- 26: Entladestation
- 28: Verstellsicherung
- 30: Verstellsicherung
- 32: Steuerung
- 34: Palettiereinrichtung
- 36: Säule
- 38: Verbindungselemente
- 40: Ständer
- 42: Führungsleiste
- 44: Führungsleiste
- 46: Wagenplatte
- 48: Führungsrollenpaare
- 50: Führungsrollenpaare
- 52: Stützelement
- 54: Stützelement
- 56: Zahnriemen
- 58: Umlenkrolle
- 60: Umlenkrolle
- 62: Getriebeanordnung
- 64: Antrieb
- 66: Trägerplatte
- 68: Profilleiste
- 70: Schlitten
- 72: Führungselement
- 74: Führungsaufnahme
- 76: Stützrollen
- 78: Gehäuse
- 80: zweiter Zahnriemen
- 82: Umlenkrolle
- 84: Umlenkrolle
- 86: Greiferrahmen
- 88: Rahmenöffnung
- 90: Palette
- 92: Palettenwagen
- 94: Verriegelungselemente
- 96: Koppelelement
- 98: Koppelelement
- 100: Auskragung
- 102: Auskragung
- 104: Portalroboter
- 106: Portal
- 110: Werkstückhandhabungssystem
- 112: Verschiebeeinheit
- 120: Werkstückhandhabungssystem
- 122: starre Auflage
- 124: Verschiebeeinheit
- 130: Werkstückhandhabungssystem
- 132: Schutzwände
- 134: Ladestation
- 136: Öffnung
- 138: Palettenwagen
- 140: Grundplatte
- 142: Stapelposition
- 144: Stapelposition
- 146: Paletten
- 148: Verkleidungselement
- 150: Palettiereinrichtung
- 152: Ständer
- 154: Trägerplatte
- 156: Schlitten
- 158: Greiferrahmen
- 160: Portalroboter
- 162: Portal
- 164: Doppelgreifer
- 166: Anschlag

## Patentansprüche

1. Werkstückhandhabungssystem für eine Bearbeitungseinrichtung,
mit einer Ladestation (20) zum Einschleusen mindestens eines Trägers (92) in das System (10, 110, 120), auf dem mehrere, aufeinander gestapelte Werkstück-Paletten (90) mit von der Bearbeitungseinrichtung (12) zu bearbeitenden Werkstücken angeordnet sind,
mit einer der Ladestation (20) nachgeordneten Bereitstellungsstation (22), in die der in die Ladestation (20) eingeschleuste Träger (92) transportierbar ist,
mit einer nahe der Bereitstellungsstation (22) angeordneten Palettiereinrichtung (34), die einen beweglichen Greifer (86) aufweist, der zum Aufnehmen jeweils einer Palette (90) des auf dem in der Bereitstellungsstation (22) befindlichen Träger (92) angeordneten Stapels und zum Ablegen der aufgenommenen Palette (90) in einer der Bereitstellungsstation (22) benachbarten Wartestation (24, 24'') dient, und
mit einer nahe der Palettiereinrichtung (34) angeordneten Ladeeinrichtung (104) zum Handhaben der Werkstücke zwischen der jeweils oben im Stapel angeordneten Palette (90) und der Bearbeitungseinrichtung (12),
dadurch **gekennzeichnet,**
daß der Greifer (86) der Palettiereinrichtung (34) zum Transport des Trägers (92) von der Ladestation (20) in die Bereitstellungsstation (22) dient.

2. Werkstückhandhabungssystem nach Anspruch 1,
dadurch **gekennzeichnet,**
daß der Greifer (86) der Palettiereinrichtung (34) mindestens ein Koppelelement (96, 98) aufweist, mit dem der in der Ladestation (20) befindliche Träger (92) zum Schleppen von der Ladestation (20) in die Bereitstellungsstation (22) an den Greifer (86) ankoppelbar ist.

3. Werkstückhandhabungssystem nach Anspruch 2,
dadurch **gekennzeichnet,**
daß das Koppelelement (96, 98) ein vorzugsweise betätigbarer Haken ist, der zum Ankoppeln mit einer am Träger (92) ausgebildeten Kontur oder Öffnung in Eingriff bringbar ist.

4. Werkstückhandhabungssystem nach Anspruch 1, 2 oder 3,
dadurch **gekennzeichnet,**
daß der Greifer (86) entlang zweier rechtwinklig zueinander verlaufender Achsen (42, 44, 68) bewegbar ist, wobei eine der Achsen (42, 44) vorzugsweise in vertikaler Richtung und die zweite Achse (68) vorzugsweise in horizontaler Richtung verläuft.

5. Werkstückhandhabungssystem nach einem der Ansprüche 1 bis 4,
dadurch **gekennzeichnet,**
daß der den Träger (92c) von der Ladestation (20) in die Bereitstellungsstation (22) transportierende Greifer (86) zum Verschieben eines gegebenenfalls bereits in der Bereitstellungsstation (22) befindlichen zweiten Trägers (92a) in die Wartestation (24) dient.

6. Werkstückhandhabungssystem nach Anspruch 5,
dadurch **gekennzeichnet,**
daß der Greifer (86) zum Verschieben eines gegebenenfalls bereits in der Wartestation (24) befindlichen dritten Trägers (92b) in eine Entladestation (26) dient, die der Wartestation (24) unmittelbar benachbart ist und zum Ausschleusen der Träger (92) aus dem System (10) dient.

7. Werkstückhandhabungssystem nach Anspruch 5,
dadurch **gekennzeichnet,**
daß sich vorzugsweise quer zur Transportrichtung des Trägers (92), in der der Träger (92) zwischen der Ladestation (20) und der Bereitstellungsstation (22) bewegbar ist, an die Wartestation (24) eine Entladestation (26') zum Ausschleusen der Träger (92) aus dem System (110) anschließt, und daß zwischen der Wartestation (24) und der Entladestation (26') eine Verschiebeeinheit (112) zum Transport des Trägers (92) von der Wartestation (24) in die Entladestation (26') vorgesehen ist.

8. Werkstückhandhabungssystem nach einem der Ansprüche 1 bis 4,
dadurch **gekennzeichnet,**
daß die Wartestation (24'') eine Ablage (122) als Zwischenpuffer aufweist, auf der die Paletten (90) stapelbar sind, daß sich quer zur Transportrichtung des Trägers (92), in der der Träger (92) zwischen der Ladestation (20) und der Bereitstellungsstation (22) bewegbar ist, an die Bereitstellungsstation (22) eine Entladestation (26'') zum Ausschleusens der Träger (92) anschließt, und daß zwischen der Bereitstellungsstation (22) und der Entladestation (26'') eine Verschiebeeinheit (124) zum Transport des Trägers (92) von der Bereitstellungsstation (22) in die Entladestation (26') vorgesehen ist.

9. Werkstückhandhabungssystem nach einem der vorhergehenden Ansprüche,
dadurch **gekennzeichnet,**
daß die Palettiereinrichtung (34) einen Ständer (40) mit einer vertikalen Führung (42, 44) aufweist, an der eine Wagenplatte (46) durch einen ersten Antrieb (64) in vertikaler Richtung hin und her bewegbar ist, daß an der Wagenplatte (46) eine horizontale Führung (68) vorgesehen ist, die parallel zur Transportrichtung des Trägers (92), in der der Träger (92) zwischen der Ladestation (20) und der Bereitstellungsstation (22) bewegbar ist, verläuft und entlang der der Greifer (86) durch einen zweiten Antrieb hin und her bewegbar ist.

10. Werkstückhandhabungssystem nach einem der vorhergehenden Ansprüche,
dadurch **gekennzeichnet,**
daß der Greifer ein geschlossener Rahmen (86) mit einer Rahmenöffnung (88) ist, deren Innenumfangsabmessungen etwas größer sind als die Außenabmessungen der zu stapelnden Paletten (90), und daß am Rahmen (86) mindestens ein Verriegelungselement (94) vorgesehen ist, das mit der Palette (90) in Eingriff bringbar ist, wenn diese bei abgesenktem Rahmen (86) zumindest teilweise durch die Rahmenöffnung (88) ragt.

11. Werkstückhandhabungssystem nach einem Ansprüche 1 bis 10,
dadurch **gekennzeichnet,**
daß der Greifer ein an einer Seite offener Rahmen mit einer U-förmigen Rahmenöffnung ist, deren Innenumfangsabmessungen etwas größer sind als die Außenabmessungen der zu stapelnden Paletten (90), wobei die offene Seite des Rahmens quer zur Transportrichtung des Greifers verläuft, und daß am Rahmen mindestens ein Verriegelungselement vorgesehen ist, das mit der Palette in Eingriff bringbar ist, wenn diese bei abgesenktem Rahmen zumindest teilweise durch die U-förmige Rahmenöffnung ragt.

12. Werkstückhandhabungssystem nach einem der vorhergehenden Ansprüche,
dadurch **gekennzeichnet,**
daß in der Ladestation (20), der Bereitstellungsstation (22), der Wartestation (24) und/oder der Entladestation (26, 26', 26'') mindestens eine vorzugsweise betätigbare Verstellsicherung (28, 30) vorgesehen ist, die den in der Lade-, der Bereitstellungs-, der Warte- bzw. der Entladestation (20, 22, 24, 26, 26', 26'') befindlichen Träger (92) in einer vorgegebenen Stellung hält.

13. Verfahren zum Handhaben von Werkstücken, bei dem
mindestens ein Träger (92), auf dem mehrere, aufeinander gestapelte Werkstück-Paletten (90) mit von einer Bearbeitungseinrichtung (12) zu bearbeitenden Werkstücken angeordnet sind, in eine Ladestation (20) eines Werkstückhandhabungssystems (10, 110, 120) eingeschleust wird,
der Träger (92) anschließend mit Hilfe eines beweglichen Greifers (86) einer an einer Bereitstellungsstation (22) angeordneten Palettiereinrichtung (34) von der Ladestation (20) in die Bereitstellungsstation (22) transportiert wird,
der Greifer (86) nacheinander die auf dem Träger (92) aufgestapelten Paletten (90) von der Bereitstellungsstation (22) in eine der Bereitstellungsstation (22) benachbarte Wartestation (24, 24'') umsetzt,
eine Ladeeinrichtung (104) die Werkstücke zwischen der jeweils oben im Stapel angeordneten Palette (90) und der Bearbeitungseinrichtung (12) hin und her transportiert, und
die in der Wartestation (24, 24'') angeordneten Paletten mit den bearbeiteten Werkstücken einer Entladestation (26, 26', 26'') zugeführt werden, aus der die Paletten (90) dem Werkstückhandhabungssystem (10, 110, 120) entnommen werden.

14. Verfahren nach Anspruch 12, bei dem
der bewegliche Greifer (86) zum Transport des Trägers (92) von der Ladestation (20) in die Bereitstellungsstation (22) mit Hilfe eines am Greifer (86) vorgesehenen Koppelelementes (96, 98) an dem Träger (92) angekoppelt wird und der Greifer (86) anschließend den Träger (92) in die Bereitstellungsstation (22) schleppt.

15. Verfahren nach Anspruch 12 oder 13, bei dem
der Greifer (86) während des Transportes des Trägers (92a) von der Ladestation (20) in die Bereitstellungsstation (22) einen bereits in der Bereitstellungsstation (22) befindlichen zweiten Träger (92b) in die Wartestation (24) schiebt.

16. Verfahren nach Anspruch 14, bei dem
der Greifer (86) während des Schiebens des zweiten Trägers (92c) von der Bereitstellungsstation (22) in die Wartestation (24) gleichzeitig einen in der Wartestation (24) befindlichen dritten Träger (92b) in die Entladestation (26) schiebt.

17. Verfahren nach Anspruch 14, bei dem
mit Hilfe einer Verschiebeeinheit (114) der in der Wartestation (24) befindliche Träger (92), auf dem die Paletten (90) mit den von der Bearbeitungseinrichtung (12) bearbeiteten Werkstücke aufgestapelt sind, von der Wartestation (24) in die Entladestation (26') bewegt wird.

18. Verfahren nach Anspruch 12 oder 13, bei dem
die Paletten (90) nach dem Umstapeln von der Bereitstellungsstation (22) in die Wartestation (24'') vom Greifer (86) wieder auf den Träger (92) in der Bereitstellungsstation (22) zurückgestapelt werden, und der Träger (92), auf dem die Paletten (90) mit den von der Bearbeitungseinrichtung (12) bearbeiteten Werkstücke aufgestapelt sind,
mit Hilfe einer Verschiebeeinheit (124) von der Bereitstellungsstation (22) in die Entladestation (26'') bewegt wird.

19. Werkstückhandhabungssystem für eine Bearbeitungseinrichtung,
mit einer Ladestation (134) zum Ein- und Ausschleusen mindestens eines Trägers (138) in das System (130), der eine Stapelposition (142) aufweist, auf der mehrere, aufeinander gestapelte WerkstückPaletten (146) mit von der Bearbeitungseinrichtung zu bearbeitenden Werkstücken angeordnet sind,
mit einer nahe der Ladestation (134) angeordneten Palettiereinrichtung (150), die einen beweglichen Greifer (158) aufweist, der zum Umstapeln der auf dem Träger (138) aufgestapelten Paletten (146) dient, und
mit einer nahe der Palettiereinrichtung (150) angeordneten Ladeeinrichtung (160) zum Handhaben der Werkstücke zwischen der jeweils oben im Stapel angeordneten Palette (146) und der Bearbeitungseinrichtung,
dadurch **gekennzeichnet,**
daß der Träger (138) mindestens eine weitere Stapelposition (144) für die Paletten (146) aufweist, und daß der Greifer (158) der Palettiereinrichtung (150) die jeweils aufgenommene Palette (146) zum Umstapeln auf der weiteren Stapelposition (144) des Trägers (138) ablegt.

20. Werkstückhandhabungssystem nach Anspruch 19,
dadurch **gekennzeichnet,**
daß die Ladestation (134) zumindest teilweise nach außen durch Schutzwände (132) begrenzt ist, und daß der Träger (138) an einer seiner Seiten ein vom Träger (138) abstehendes Verkleidungselement (148) aufweist, das, wenn sich der Träger (138) in der Ladestation (134) befindet, eine an einer der Schutzwände (132) ausgebildete Öffnung (136), die zum Ein- und Ausschleusen des Trägers (138) in die Ladestation (134) dient, zumindest teilweise verschließt.
